# EUROPEAN PATENT SPECIFICATION

(11) **EP 2 389 479 B1**
(45) Date of publication and mention of the grant of the patent: **14.08.2013**
(21) Application number: 09799158.2
(22) Date of filing: 11.12.2009
(51) Int. Cl.: D21B 1/08, D21J 1/20

(54) **PROCESS FOR MANUFACTURING INSULATING MATERIAL**
VERFAHREN ZUR HERSTELLUNG EINES DÄMMSTOFFES
PROCÉDÉ DE FABRICATION DE MATÉRIAU ISOLANT

(30) Priority: 12.12.2008 IT TO20080927
(43) Date of publication of application: 30.11.2011
(73) Proprietor: Cavaleri, Andrea, 10093 Collegno (Torino) (IT); Contu, Davide, 10076 Nole (Torino) (IT)
(72) Inventor: Cavaleri, Andrea, 10093 Collegno (Torino) (IT); Contu, Davide, 10076 Nole (Torino) (IT)
(74) Representative: Frontoni, Stefano
(86) International application number: PCT/IB2009/055713
(87) International publication number: WO 2010/067338

(56) References cited:
- EP-A1- 0 429 735
- DE-A1- 3 307 736
- DE-A1- 4 417 503
- GB-A- 1 386 299
- US-A- 5 423 993

## Description

### DESCRIPTION TEXT

The present invention regards production of thermal and acoustic insulation material.

The invention specifically regards a process for making cellulose-based thermal and/or acoustic insulation material, for example by using paper sludge. Such process is for example known from EP-A-0 429 735, however provided wherein is the process of adding resins or other substances to the sludge in order to confer mechanical characteristics to the end product. The German patent DE3307736 A1 describes a method for regenerating waste paper and cardboard in order to produce an aqueous mixture of fibres to be used as base material for producing thermal and acoustic insulations.

Similar processes are also known from DE 4417503 A1, US 5423993 A and GB 1386299 A.

### PRIOR ART

The processes known for production of cellulose thermoacoustic insulation material in form of flakes start from scrap paper, cardboard and waste paper. Due to long periods of storage, often outdoors or in hygienically unhealthy places, the raw material (scrap paper, cardboard and waste paper etc) may reach high levels of organic contamination that consist in the development of colonies of bacteria, insects, fungi etc.

Thus such raw material must be sanitised and protected against possible new procreation of microorganisms before being used. Observable among production processes used currently are dry processes, wherein sanitisation occurs by adding bioinhibitors, such as for example boron compounds (e.g. boric acid, borax, etc.) which are added dry.

Furthermore, the thermoacoustic insulation material obtained from such processes has high contents of substances such as calcium carbonate, ink, glaze, etc., initially present on the scrap paper, cardboard and waste paper, thus reducing the performance of the insulating material.

The wet process under patent DE3307736 A1 differs from those described above solely due to the fact that the initial material (scrap paper, cardboard and waste paper, etc) is moistened. In any case, the pulp obtained reveals the same defects due to the presence of unwanted substances which reduce the insulation performance, and still requires a sanitizing process.

### Summary of the invention

The present invention has the object of providing improved thermal and/or acoustic insulation material.

According to the present invention, such object is attained through the solution specifically referred to in claim 1. The claims form an integral part of the technical disclosure provided herein in relation to the invention.

An embodiment of the present invention provides for the use of paper sludge, preferably derived from industrial processes that use long fibre cellulose, to produce thermal and/or acoustic insulations in form of flakes. In particular, the present invention provides for the use waste paper as secondary raw material, instead of first extraction cellulose or cellulose recycled in the known production cycles for manufacturing thermal and/or acoustic insulations, without requiring integrating the same sludge with additives, substances or resins that confer mechanical characteristics to the end material.

The invention allows reducing production of wastes in paper industries. Paper industry wastes are not contaminated biologically and thus do not require sanitising operations. Also the aspect of conserving durability is facilitated in that it is possible to intervene using a wider range of products such as for example fungicides, flame retardants, colouring agents, etc due to the possibility - provided for by the invention - of using additives both in solid phase and in liquid phase, allowing addition of additives at several points of the process. Furthermore, the paper industry wastes do not contain substances such as calcium carbonate, glazing, ink which limit the thermal and acoustic insulation capacity of the end product.

Other embodiments provide for the use of paper sludge, preferably deriving from industrial processes that use "long fibre" cellulose, added to which are various substances and according to known thechniques in order to improve aspects different from the mechanical consistency of the end product, for example additivation with substances useful to improve the durability of the product.

### Detailed description

Now, the invention shall be described, strictly for exemplifying and non-limiting purposes, with reference to the attached drawings, wherein:
- figure 1 represents a first embodiment of a process for producing thermal and/or acoustic insulations in form of flakes;
- figure 2 represents a second alternative embodiment of a process for producing thermal and/or acoustic insulations in form of flakes.

Illustrated in the following description are various specific details aimed at providing an in-depth understanding of the embodiments. The embodiments may be obtained without one or more specific details, or through other methods, components, materials etc. In other cases, known structures, materials or operations are not shown or described in detail to avoid obscuring aspects of the embodiments.

Reference to "an embodiment" in this description indicates that a particular configuration, structure or characteristic described regarding the embodiment is included in at least one embodiment. Hence, expressions such as "in an embodiment", possibly present in various parts of this description do not necessarily refer to the same embodiment. Furthermore, particular configurations, structures or characteristics may be combined in any suitable manner in one or more embodiments.

References herein are only used for facilitating the reader and thus they do not define the scope of protection or the range of the embodiments.

The present description regards a process for producing cellulose-based thermal and/or acoustic insulations using paper sludge and, in particular, paper sludge mainly derived from processes that require long fibre cellulose as raw material.

The technical solution described herein provides for the use of paper sludge for producing insulation material as direct surrogates for first extraction cellulose or recycled cellulose or a combination of both.

The technical practicability of the invention lies in the characteristics of the sludge subject of the inventing suitable for such purpose.

The technical solution described herein may be summarised in the use of wastes from known paper production industrial processes, for producing thermal and/or acoustic insulations in form of flakes.

Use of paper industry waste reduces the environmental impact of the product on the ecosystem, though there still remains impacts related to the industrial production process. As a matter of fact a considerable share of the paper industry environmental burden is represented by the production of paper sludge.

In this case, the environmental impact of paper sludge is so high that the national law provides that it be treated as "special waste". Paper sludge may also be classified as "polluting special waste" or "nonpolluting special waste" depending on the chemical additives used in the production process. In any case, costs incurred for disposing of these wastes are not negligible and they weigh, even considerably, on the financial budgets of the paper industries.

Over the years, various technologies have been developed with the aim - on one hand - of reducing costs and - on the other hand - reducing the environmental impact of the paper industries.

Cellulose is a molecule capable of organising itself into chains and thus fibres. The mechanical characteristics of the paper produced are linked to the length of the cellulose fibres. Cellulose may be classified according to the mean length of the fibres. In literature, cellulose with fibres in the order of 20 microns is referred to as "short fibre", cellulose with fibres in the order of 200 microns long is referred to as "average fibre", and cellulose having fibres in the order of 1000 microns long is referred to as "long fibre".

Conventional paper production methods (e.g. paper for photocopying machines) may employ a wide range of cellulose and in conventional industrial processes the residual material, i.e. sludge produced by the paper industry, is purged by the cellulose fibres capable of conferring mechanical characteristics to the paper. Thus, conventional industrial processes produce paper sludge with none or extremely low mechanical; characteristics.

Known are methods for using such sludge. Currently, applications regarding reutilisation of sludge with relatively long fibre consists in producing cardboard cores for rolls on which the same paper productions shall be wrapped.

From an environmental point of view, the present invention reduces the amount of paper industry production wastes and has lower impact on the ecosystem. Furthermore, paper industries gain a financial advantage in that they have the possibility to convert waste material to be disposed of (i.e. a cost) into secondary raw material (i.e. a resource). In addition, availability of low cost raw material may help reducing the price of the insulation material hence leading to an advantage for the users too.

Paper sludge may be used as raw material in currently known conventional industrial processes for producing cellulose-based thermal and acoustic insulation material in form of flakes. Illustrated below for exemplification purpose, but solely regarding the description outlined hereinafter, is a possible production process. The paper sludge considered hereinafter may have different levels of water content.

### Example 1 - Process for producing loose insulation material in form of flakes

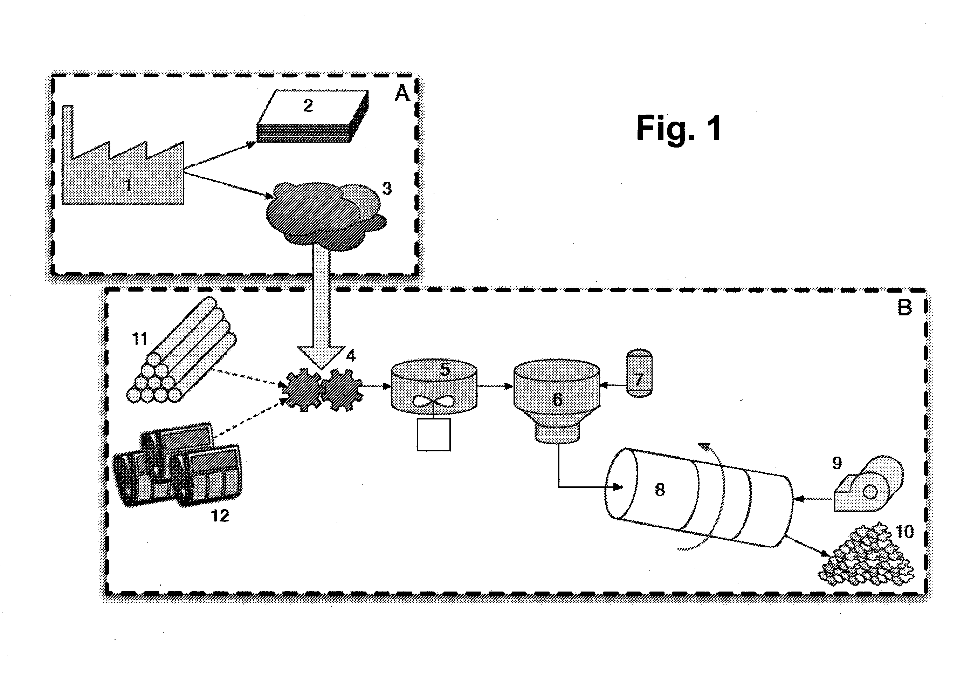

In the embodiment described herein, paper industry waste sludge with high amount of long, average and short fibre cellulose is used for producing loose insulation material in form of flakes. A diagram of an industrial process for producing the abovementioned loose insulation material in form of flakes is illustrated in Figure 1.

The industrial process A provides for that the paper industries 1 produce particular papers 2 using average and long fibre cellulose. The paper sludge 3, derived from the industrial process A, is reutilized in a known industrial process B and used for producing thermal and/or acoustic insulations in form of flakes.

Regarding the process for producing insulation material in form of flakes B, the sludge 3 may be used as a surrogate or in combination with conventionally used raw material. The known industrial processes for producing insulation material in form of flakes conventionally use first extraction cellulose 11 and/or recycled cellulose 12 (scrap paper).

Thus, the industrial process B provides for initially subjecting surrogate secondary raw material 3 (sludge) characterising the present invention optionally together with conventional raw material 11 and/or 12 to a reduction of the size of the pieces by feeding them into a cutting device 4. Subsequently, possibly a series of mixers 5 is used for homogenising material from different sources. The sludge 3 possibly in first extraction cellulose 11 and/or recycled cellulose 12 association is fed into a pulper 6. During processing in the pulper 6 additives 7 (for example boron salts) useful to improve the durability of the end product 10, insulation material in form of flakes, may be added. Sludge is thus introduced into a mill 8 possibly associated to a drying device 9. The mill 8 may contain metal percussion means (such as for example balls or rolls) or other devices useable for the hammering required to open the cellulose fibres, thus reducing density thereof and producing flakes. The cellulose flake 10 obtained at the end of the process may be used for thermal and/or acoustic insulation.

In order to improve the duration of insulation flakes further, fungicides are added to the sludge produced in the paper industries. Such addition is performed when sludge is still in flowable form, with a solid state material content between 8% and 10% in weight. Obviously, the construction details and embodiments may widely vary with respect to the details described and illustrated, without however departing from the scope of protection of the present invention, as defined in the attached claims.

### Example 2 - Process for producing loose insulation material in form of flakes

In the embodiment described herein, paper industry wastes with high amount of long, average and short fibre cellulose are used for producing loose insulation material in form of flakes.

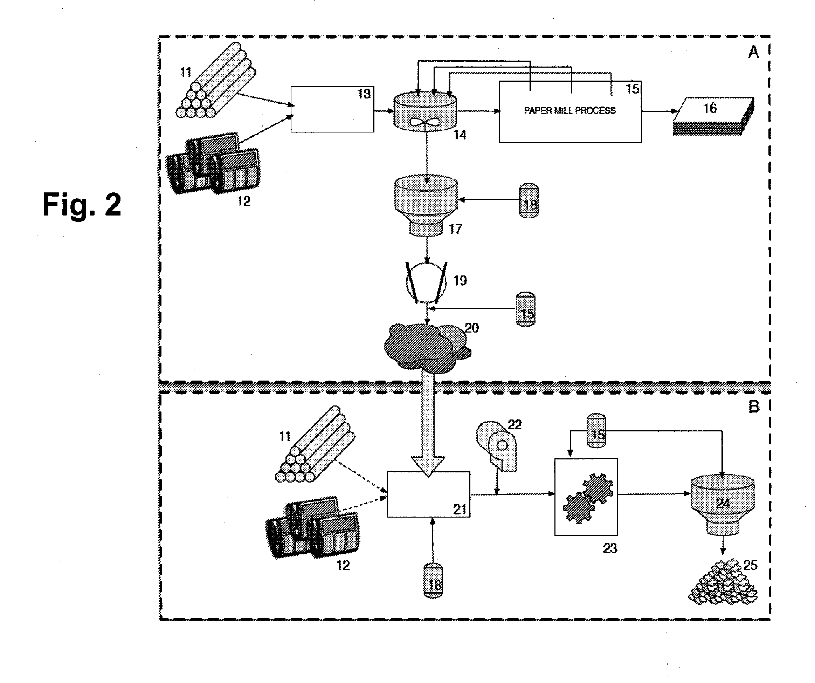

A diagram of an industrial process for producing the abovementioned loose insulation material in form of flakes is illustrated in Figure 2.

The industrial process A provides for the production of special papers 16 using virgin cellulose 11 or recycled cellulose 12. After storage, the cellulose 13 reaches refining 14 where - on one hand - wastes of the subsequent steps of the process 15 are supplied, while - on the other hand - paper industry wastes which are stored and concentrated in the step 17 are eliminated.

Should such wastes be intended to be used in a process for producing insulation material in form of flakes of the type described above, they are treated, while still in the paper industry factory, with additives 18 in liquid solution. Such additives may be one or more from among flame retardants, fungicides, colouring agents, etc. Such additives are added when the wastes or paper sludge are still in flowable form, with solid state material content comprised between 8% and 10% in weight.

The wastes of the process A are thus subsequently dried in step 19, for example mechanically by means of a screw feeder, and lastly, possibly treated with additives 15 such as flame retardants, fungicides, colouring agents etc once again. In this further step, the additives may be both in liquid form (solution) and solid form (powder).

The wastes thus produced may be transferred and used as raw material for the process B of producing thermal and acoustic insulation material in form of flakes. Such wastes are substantially made up of sludge, having solid state material content comprised between 25% and 60% in weight.

The production process B illustrated in Figure 2 represents an alternative embodiment with respect to that illustrated in Figure 1. Such process provides for that the wastes of the process A be initially stored in a step 21 and possibly composed in a mixture that may also provide for first extraction cellulose 11 and/or recycled cellulose 12.

During storage, the wastes may be treated using additives 18 in liquid solution (liquid phase) such as flame retardants, fungicides, colouring agents, etc.

The material is thus dried in a step 22, both naturally and by means forced ventilation and/or heating systems, and subsequently moved to step 23 for hammering 16. In such step, for example obtained by means of a hammer mill, the dried material is expanded in volume until it forms insulation flakes.

The flakes may also be treated with additives 15 in powder form, both during the hammering step and during the subsequent pre-packaging storage 17.

## Claims

1. Process for producing cellulose-based thermal and/or acoustic insulation material, wherein said process envisages the use of paper sludge to produce said insulation material and in that it envisages to add to said paper sludge at least one additive from among flame retardants, colouring agents and fungicides, when said paper sludge comprises a solid state material content between 8% and 10% in weight, said insulation material being in form of flakes and being free of bonding agents.

2. Process according to claim 1, wherein said paper sludge derives from processes that use long fibre cellulose.

3. Process according to any one of claims 1 to 2,
wherein said paper sludge is subjected to mechanical hammering operations.

4. Process according to any one of claims 1 to 3,
wherein said paper sludge does not comprise material made of sheet elements.

5. Process according to claim 1, wherein the additives are added in form of liquid solution or powder material.

## Patentansprüche

1. Verfahren zum Herstellen von Wärme- und/oder Schalldämmungsmaterial auf Zellstoffbasis, wobei das Verfahren den Einsatz von Papierschlamm zum Herstellen des Dämmungsmaterials vorsieht und es vorsieht, dem Papierschlamm wenigstens einen Zusatzstoff aus Flammhemmern, Färbemitteln und Fungiziden zuzusetzen, wenn der Papierschlamm einen Festkörpermaterial-Gehalt zwischen 8 Gew.-% und 10 Gew.-% umfasst, und das Dämmungsmaterial in Form von Flocken vorliegt und frei von Bindemitteln ist.

2. Verfahren nach Anspruch 1, wobei der Papierschlamm aus Verfahren stammt, bei denen Langfaserzellstoff eingesetzt wird.

3. Verfahren nach einem der Ansprüche 1 bis 2, wobei der Papierschlamm mechanischen Hämmervorgängen unterzogen wird.

4. Verfahren nach einem der Ansprüche 1 bis 3, wobei der Papierschlamm kein aus Blattelementen hergestelltes Material umfasst.

5. Verfahren nach Anspruch 1, wobei die Zusatzstoffe in Form von flüssiger Lösung oder pulverförmigem Material zugesetzt werden.

## Revendications

1. Procédé de production d'un matériau isolant thermique et/ou acoustique à base de cellulose, dans lequel ledit procédé prévoit l'utilisation de boues de papier pour produire ledit matériau isolant et prévoit d'ajouter auxdites boues de papier au moins un additif parmi des retardateurs de flamme, des agents colorants et des fongicides, lorsque lesdites boues de papier ont une teneur en matières solides comprise entre 8% et 10 % en poids, ledit matériau isolant étant sous forme de flocons et dépourvu d'agents de liaison.

2. Procédé selon la revendication 1, dans lequel lesdites boues de papier proviennent de procédés qui utilisent de la cellulose à fibres longues.

3. Procédé selon l'une quelconque des revendications 1 et 2, dans lequel lesdites boues de papier sont soumises à des opérations de martèlement mécanique.

4. Procédé selon l'une quelconque des revendications 1 à 3, dans lequel lesdites boues de papier ne comprennent pas de matériau fait d'éléments en feuille.

5. Procédé selon la revendication 1, dans lequel les additifs sont ajoutés sous forme d'une solution liquide ou d'un matériau pulvérulent.
